# EUROPÄISCHE PATENTANMELDUNG

(11) **EP 3 178 440 A1**
(43) Veröffentlichungstag der Anmeldung: **14.06.2017**
(21) Anmeldenummer: 15199362.3
(22) Anmeldetag: 10.12.2015
(51) Int. Cl.: A61C 13/00

(54) **VERFAHREN ZUR ERZEUGUNG VON DENTALRESTAURATIONEN UND DENTALRESTAURATION-ERZEUGUNGSVORRICHTUNG SOWIE FRÄSKÖRPER**

(71) Anmelder: Ivoclar Vivadent AG, 9494 Schaan (LI)
(72) Erfinder: Burger, Goran, 9472 Grabs (CH)
(74) Vertreter: Baronetzky, Klaus

(57) **Zusammenfassung**

Die Erfindung betrifft ein Verfahren zur Erzeugung von Dentalrestaurationen (20), bei welchem jede Dentalrestauration (20) eine Krone (24, 26, 28) und ein Abutment aufweist, die insbesondere über eine Klebeverbindung nach jeweiliger Fertigstellung miteinander verbunden werden. Sie kennzeichnet sich durch eine CAD/CAM-Vorrichtung, die eine Mehrzahl von Kronen (24, 26, 28) auf einer Scheibe (10) virtuell anordnet und dann in oder an jedem Kronenrohling eine Innenstruktur (22) passend zu dem zugehörigen, insbesondere präfabrizierten, Abutment, insbesondere hinsichtlich der Tiefe der Innenstruktur (22), per Schleifen oder Fräsen ausbildet. Anschließend hieran bildet die Außenstruktur (30) der Krone (24, 26, 28) - ggf. unter Belassung von Haltestegen - aus.

Die Erfindung betrifft außerdem eine Dentalrestaurations-Erzeugungsvorrichtung, bei welcher jede Dentalrestauration (20) eine Krone (24, 26, 28) und ein mit dieser zu verklebendes Abutment aufweist.

Die Erfindung betrifft darüber hinaus einen Fräskörper für das Erstellen mehrerer Dentalrestaurationen mit je einer Krone (24, 26, 28) und je einem mit dieser zu verklebenden Abutment.

## Beschreibung

Die Erfindung betrifft ein Verfahren zur Erzeugung von Dentalrestaurationen, gemäß dem Oberbegriff von Anspruch 1, sowie eine Dentalrestaurations-Erzeugungsvorrichtung, gemäß dem Oberbegriff von Anspruch 10, sowie einen Fräskörper gemäß Anspruch 12.

Eine Dentalerzeugungsvorrichtung sowie ein zugehöriges Verfahren zur Herstellung von Dentalrestaurationen ist seit langem bekannt.

In weitem Umfang wird heutzutage das Verfahren gemäß der WO 2004/86999 A1 eingesetzt. Gemäß diesem Verfahren wird ein scheibenförmiger Rohling verwendet, und es werden die einzelnen Zähne nach Vorgabe der CAD-Vorrichtung, jedoch meist mit Benutzereingriff, an geeigneten Stellen gefräst.

Ferner aus aus der WO 2011/056 452 A2 (EP 2 493 414 A2)ein Verfahren zur Herausfräsen einer Krone oder Suprastruktur aus einem Rohling bekannt, wobei die Vorgaben hinsichtlich der Innenstruktur - entsprechend der Form eine Abutments - berücksichtigt werden.

Typischerweise werden derartige Dentalrestaurationen unter Berücksichtigung der Fräsergonomie gefertigt. Wenn beispielsweise eine Innenstruktur der Dentalrestauration erforderlich ist, wird diese zunächst angefertigt, und anschließend hieran wird die Außenkontur per Fräsen erstellt. Typischerweise werden hierbei Befestigungsstege belassen, und die Dentalrestauration wird unter Durchtrennen der Befestigungsstreben aus der Rohlingscheibe entfernt.

Rohlingscheiben können aus Keramik, aus Komposit, oder aber auch aus Kunststoff bestehen, je nach der Materialwahl für die Dentalrestauration. Der Fräsauftrag für eine Dentalrestauration liegt typischerweise in Form einer STL-Datei vor, die die exakten Außenkonturen - und gegebenenfalls auch die Innenstrukturen - der Dentalrestauration wiedergibt und die Mehrachs-Fräsmaschine entsprechend ansteuert.

Wenn nun ein neuer Fräsauftrag vorliegt, wird typischerweise eine Scheibe aus dem Scheibenmagazin entnommen und - sei es manuell, sei es automatisch - in eine geeignete Werkstückhalterung der Dentalfräsmaschine lagegerecht eingebracht. Es werden Referenzpunkte bestimmt, und basierend hierauf beginnt die Dentalfräsmaschine damit, die Dentalrestauration zu erstellen.

Es können auch mehrere Bearbeitungsaufträge nacheinander vorgenommen werden, wobei der Zahntechniker auf einen ausreichenden Abstand zwischen Dentalrestaurationen auf der Scheibe achtet.

Bei Kronen, die über ein Abutment mit einem Implantat verbunden werden sollen, ist es wichtig, dass die Höhe der Innenstruktur zu der Höhe des Rohrabschnitts des Abutments passt, um eine unzutreffende Höhenlage der späteren Dentalrestauration im Mund des Patienten zu vermeiden. Wenn beispielsweise die Innenstruktur zu kurz, also zu wenig tief gefertigt ist, würde ohne entsprechende Nacharbeit die Dentalrestauration über die Okklusionsebene hinausragen, und die Fehlstellen müssten durch manuelles Beschleifen intensiv beseitigt werden, was aufwändig ist und auch die Akzeptanz beim Patienten nachhaltig reduziert.

Zwar ist es an sich bekannt geworden, die Höhe des Rohrabschnitts durch Kürzen, das gegebenenfalls auch maschinell unterstützt vorgenommen werden kann, bei Bedarf zu reduzieren, beispielsweise auf die drei Längen L, M, und S. Dennoch ist es manchmal erforderlich, zur Lagekorrektur ein Abschleifen vorzunehmen, gerade auch wenn die Zielhöhe zwischen zwei der vorgegebenen Höhen liegt.

Daher liegt der Erfindung die Aufgabe zugrunde, ein Verfahren zur Erzeugung von Dentalrestaurationen gemäß dem Oberbegriff von Anspruch 1 sowie eine Dentalrestaurations-Erzeugungsvorrichtung gemäß dem Oberbegriff von Anspruch 10 sowie einen Fräskörper gemäß Anspruch 12. zu schaffen, die hinsichtlich der Notwendigkeit, Nachkorrekturen vornehmen zu müssen, verbessert ist, und dennoch einen besonders effizienten Materialeinsatz erlaubt.

Diese Aufgabe wird erfindungsgemäß durch die Ansprüche 1, 10 und 12 gelöst. Vorteilhafte Weiterbildungen ergeben sich aus den Unteransprüchen.

In erfindungsgemäß günstiger Ausgestaltung ist es vorgesehen, die Lage jeder zu erzeugenden Dentalrestauration vorab virtuell zu bestimmen. Dies betrifft sowohl die Lage in X- und Y-Richtung, als auch die in Z-Richtung, also relativ zur Höhe der Scheibe. Bevorzugt fällt hiermit die Gingivalebene der Scheibe mit dem gingivalen Ende der beispielsweise als Krone realisierten Dentalrestauration zusammen. Wesentlich ist jedoch, dass auch die Innenstruktur der Dentalrestauration, insbesondere kurzerhand mit dem gleichen Fräser, oder aber auch mit einem angepassten Fräser beim Vorliegen einer Werkzeugbank, exakt an die Erfordernisse angepasst wird. Die Fräsdaten enthalten in diesem Falle bereits die relative Höhenlage, beispielsweise zur Okklusionsebene, so dass vorab in der CAD/CAM-Vorrichtung die passende Höhe S, M oder L des Rohrabschnitts des Abutments vorgewählt wird. Hierzu genau passend wird dann die Tiefe der Innenstruktur gefräst, so dass die Okklusionsfläche des Zahns in ihrer Höhenlage perfekt korrigiert vorliegt.

Durch die erfindungsgemäße Nesting-Software lässt sich in ebenso geeigneter Weise die Lage der Dentalrestaurationen zueinander optimieren. Bei einer zu erstellenden Dentalrestauration wird ein freier Platz auf der beispielsweise teilbearbeiteten Rohlingscheibe in Erfahrung gebracht, in welche die Dentalrestauration zuzüglich des vorgegebenen Abstands zu den Nachbarrestaurationen passt. Dieser wird dann als Fräskörper verwendet und in der CAD/CAM-Vorrichtung als "benutzt" vermerkt, so dass für die nächstfolgende Dentalrestauration ein hiervon unterschiedlicher Platz gesucht und ermittelt werden muss.

Dies funktioniert aufgrund von der Identifikation der einzelnen Scheiben über eindeutige Identitätscodes auch beim Materialwechsel. Erfindungsgemäß kann ein Scheibenmagazin mit beispielsweise 48 kreisringförmig angeordneten Scheiben eine gewissen Anzahl von Scheiben in jedem gewünschten Material enthalten. Die CAD/CAM-Vorrichtung nutzt dann zunächst die meist verbrauchte Scheibe, also mit dem geringsten Restplatz für die Erstellung von Dentalrestaurationen, natürlich in dem gewünschten Material.

Es versteht sich, dass erfindungsgemäß sowohl die exakte Drehposition der Scheibe und deren Festlegung wesentlich ist, aber auch beispielsweise ein sicherer Halt in der Werkstückaufnahme. Insofern kann beispielsweise auf den umlaufenden Vorsprung gemäß der WO 2004/086999 A1 zurückgegriffen werden, der ein sicheres Einspannen erlaubt.

Erfindungsgemäß besonders günstig ist es, dass durch die Nesting-Software der CAD-Vorrichtung die Rohlingscheibe optimal ausgenutzt wird. Während bislang die Rohlingsscheiben teilweise nach Teilgebrauch vorsorglich verworfen wurden, allein um sicherzustellen, dass nicht an einer bereits benutzten Stelle die Fräsarbeiten vorgenommen werden, erfolgt erfindungsgemäß eine Identifikation der Scheibe, und die neu herzustellende Dentalrestauration wird unter Wahrung eines Abstands zwischen den bereits hergefrästen Dentalrestaurationen optimal angeordnet.

Die Innenstrukturen der Abutments können in der vorgefertigten Rohlingscheibe entsprechend den Kundenanforderungen angepaßt vorliegen. So ist es möglich, z.B. 3 Scheiben mit je einer vorgegebene Höhe der Innenstruktur S, M und L bereitzustellen, oder aber eine Scheibe, die an bestimmten Stellen je die Höhe S bzw. M bzw. L der Innenstruktur aufweist. Die Software der CAD/CAM-Vorrichtung vermag die geeignete Scheibe zu erkennen bzw. bei Bedarf aus einem Scheibenmagazin zu laden, so dass die zu fräsende Krone an einer Stelle gefräst wird, an der die passende Innenstruktur vorliegt.

Dies leistet die Nesting-Software, die auch bei mehreren anstehenden Fräsaufträgen - entsprechend mehreren in einem Zuge zu erstellenden Dentalrestaurationen - dafür sorgt, dass die zu erzeugenden Dentalrestaurationen virtuell so gedreht werden, dass sie unter Wahrung der Abstände materialausnutzend, aber gleichzeitig materialschonend auf die Scheibe gelegt werden.

Wenn beispielsweise etwa die Hälfte der Scheibe für bereits bestehende Dental-restaurationen verbraucht ist, wird die nächste Dentalrestauration zweckmäßig in eine Ecke, aber den bereits erzeugten Dentalrestaurationen benachbart, gelegt und dort die erforderlichen Fräsarbeiten ausgeführt. Wenn beispielsweise mehrgliedrige Brücken auf der Scheibe sind oder erzeugt werden sollen, wird auch deren Krümmung, also die von einer geraden abweichende Nebeneinander-Anordnung benachbarter Zähne, ausgenutzt, um die Anordnung auf der neu zu erstellenden Dentalrestauration zu optimieren, so dass gegen Ende des Verbrauchs der Rohlingscheibe noch ein Platz verbleibt, in den gerade noch eine Brücke, beziehungsweise zum Schluss lediglich gerade noch eine Krone hineinpasst.

Im günstigsten Fall sind dann die verbleibenden Stege zwischen den Dentalrestaurationen nirgendwo breiter als ein vorgegebenen Vielfaches, beispielsweise das Zweifache des Abstands. Wenn der Abstand zwischen Dentalrestaurationen, der für die Stabilität der Scheibe während des Fräsens erforderlich ist, beispielsweise 3mm beträgt, kann demnach die Maximalbreite verbleibender Abstände 6mm betragen.

Zum Rand hin ist bevorzugt ein weiterer Abstand vorgesehen, der insbesondere größer als 3mm ist, beispielsweise 5mm.

Damit verbleibt ein mindestens mit 5mm breiter und aussteifender Rand am Umfang der Scheibe. Bei randseitiger Ausgestaltung der Scheibe gemäß der WO 2004/086999 A1 mit einem umlaufenden Randvorsprung wirkt dieser darüberhinaus weiter aussteifend.

Erfindungsgemäß bevorzugt wird bei jeder Krone oder sonstigem Dentalrestaurationsteil die Innenstruktur mit einem Fräser oder Bohrer in geeigneter Weise gemäß der CAD-Vorgabe zunächst bearbeitet und das dort zu entferndende Dentalmaterial entfernt.

Alternativ ist die Krone oder sonstiges Dentalrestaurationsteil mit den Innenstrukturen vor oder nach einem Sintern oder vor oder nach einem Vorsintern erstellt.

Die Innenstruktur ist in ihrer Form insofern an ein Abutment angepasst, das einen außen leicht konischen Rohrabschnitt aufweist und dessen Höhe kürzbar ausgelegt ist, bevorzugt in den drei Höhen L, M, und S. In entsprechender Weise ist nun die Innenstruktur der Dentalrestauration geformt, wobei ggf. ein achsparalleler Steg belassen wird, der dafür bestimmt ist, in einer Rille am Rohrabschnitt des Abutments einzugreifen, um eine Verdrehsicherung bereitzustellen.

Bevorzugt ist es, wenn die Rille sich bis zu einer Schulter des Abutments erstreckt, oder gegebenenfalls höchstens 1 mm vor dieser Schulter endet, und auch bei Kürzen des Rohrabschnitts des Abutments auf eine minimale Höhe S als Rille verbleibt.

Es versteht sich auch, dass ein geeigneter Klebespalt z. B. zwischen 50µm und 250µm bei der Herstellung der Innenstruktur der Krone bereitgestellt wird.

Abutments werden typischerweise über Implantatschrauben an dem zugehörigen Implantat befestigt. Erfindungsgemäß ist es nun vorgesehen, den Schraubkanal, dessen Durchmesser ohne weiteres kleiner sein kann als der Schraubenkopf, gleich in einem Zuge mit der Innenstruktur oder als Teil dieser herzustellen. Hierzu wird mit dem Fräser oder Bohrer die Scheibe mit einem konstanten zentralen Durchmesser bis zu ihrer gegenüberliegenden Seite durchgefräst. Anschließend an die okklusale Seite der Scheibe erstreckt sich daran unmittelbar angrenzend die Innenstruktur entsprechend der Höhe S, M und L, und mit einem demgegenüber geringerem Durchmesser der Schraubkanal, bis zur okklusalen Seite der Scheibe.

Durch die gleichgerichtete Ausgestaltung der Innenstrukturen mit Achsen, die sich parallel zueinander erstrecken, sind die ins Gewicht fallenden Toleranzen des Fräsmaschinenantriebs so gering wie möglich. Abweichungen von deutlich weniger als 50µ zwischen einander benachbarten Dentalrestaurationen sind insofern ohne weiteres möglich.

Auch wenn die Reihenfolge der Fertigung der Dentalrestaurationen auf einer Scheibe grundsätzlich beliebig ist, hat sich bei Erprobungen der Erfindung herausgestellt, dass ein Abarbeiten von einer Seite der Scheibe besonders günstig ist, wobei ab der zweiten Hälfte der Abarbeitung randnahe Bereiche bei der Anordnung eher bevorzugt werden, um eine möglichst unzerklüftete Reststruktur der Scheibe bei der Anbringung der letzten Dentalrestaurationen bereitzustellen.

Bevorzugt sind die Innenstrukturen der Dentalrestaurationen - entsprechend dem Konuswinkel der Rohrabschnitte der Abutments - leicht konisch, beispielsweise mit einem Konuswinkel zwischen 2° und 10°. Die radiale Erstreckung der Innenstruktur ist aufgrund dieses Konuswinkels leicht unterschiedlich, auch dann, wenn der Konus stets an der Gingivalseite der Scheibe beginnt.

Mit der erfindungsgemäßen konischen Ausgestaltung der Innenstruktur sind die Kerbwirkungen vom Abutment an der Innenstruktur der Dentalrestaurationen reduziert. Folglich ist ein langer Lebenzyklus der Dentalrestaurationen gewährleistet.

Die Innenkanten und die Außenkanten der Innenstruktur sind mit Radien zwischen 0,5 mm und 1,0 mm gefertigt, und die vorzugsweise zervikale Stufenbreite der Innenstruktur ist mit einem Radius von mehr als 0,3 mm nach der Art einer Hohlkehle ausgebildet.

Dadurch sind die Kerbwirkungen weiter reduziert und die Steifigkeitssprünge zwischen der Dentalrestauration und dem Abutment weiter vermieden.

Die Anordnung der Dentalrestaurationen auf der Scheibe hinsichtlich des Sicherheitsabstands gegeneinander lässt sich in weiten Bereichen auch an die Materialerfordernisse oder den Vortrieb der Fräsmaschine anpassen, eingedenk der Tatsache, dass höhere Vortriebsgeschwindigkeiten zwar eine schnellere Fertigung, aber auch eine höhere Materialbelastung und meist auch eine geringere Oberflächenqualität erzeugen.

So kann erfindungsgemäß bei knapp noch unterzubringenden Dentalrestaurationen mit einem verminderten Sicherheitsabstand von beispielsweise lediglich 2 mm per Frässoftware die Vortriebsgeschwindigkeit beispielsweise halbiert werden. Die letzte Dentalrestauration wird hierdurch etwas langsamer gefertigt, aber das vorhandene Scheibenmaterial lässt sich so optimal ausnutzen.

Erfindungsgemäß ist es besonders günstig, wenn für die Realisierung der Innenstruktur, aber auch der Außenstruktur, je auf Formbibliotheken, die in Datenbankform vorliegen können, zurückgegriffen wird. Die Innenstruktur ist dann zweckmäßig je passend zur Außenstruktur hinterlegt, wobei die Anzahl der Formen der Außenstruktur deutlich größer als die Anzahl der Formen der Innenstruktur ist. Es kann eine Nesting-Software eigesetzt werden.

Die Nesting-Software kann auf eine Zahnstrukturbibliothek zugreifen, in welcher mindestens mögliche Innenstrukturen mit hierzu passenden Abutments, entsprechend möglichen Zahnhöhen und insbesondere die passende Zuordnung von Abutments zu Innenstrukturen hinterlegt sind.

Bevorzugt ist es, wenn nach dem Fräsen oder Schleifen der Innenstruktur der Krone die Außenstruktur der Krone, insbesondere unter Belassung von Stützstreben, gefräst oder geschliffen wird, und/oder, wenn die Stützstreben anschließend an das Fräsen der Außenkontur abgetrennt, die fertige Krone gegebenenfalls versäubert und anschließend auf das passende Abutment aufgeklebt wird.

Für das Fräsen der Außenstruktur und/oder für das Fräsen des Schraubkanals lässt sich bei Bedarf die in einer hierfür geeigneten Werkstückaufnahme gelagerte Rohlingscheibe ohne weiteres um 180° drehen. Beispielsweise lässt sich auch die Außenstruktur von der Gingivalseite aus bis zum Maximum der mesio-distalen beziehungsweise lingo-vestibulären Erstreckung der Dentalrestauration fräsen. Anschließend hieran wird die Scheibe um 180° gedreht, so dass der Fräser von der Okklusalseite den okklusalen Bereich der Dentalrestaurationen fertigfräst.

Bevorzugt sind in an sich bekannter Weise Stützstreben vorgesehen, die vom Fräsen ausgespart werden, und dafür gedacht sind, die Dentalrestauration nach Fertigstellung dergestalt in der Rohlingscheibe zu halten, das einerseits ein Fräsen möglich ist, andererseits von Hand oder mit einem geeigneten Werkzeug die Dentalrestauration unter Bruch der Stützstreben aus ihrer Frässtelle entfernt werden kann.

In ebenfalls an sich bekannter Weise wird anschließend hieran der Rest der Stützstrebe entfernt beziehungsweise die Dentalrestauration an der Ansatzstelle der zugehörigen Stützstrebe, so dass im Nachhinein nicht erkennbar ist, an welcher Stelle sich die Stützstrebe erstreckte.

Weitere Vorteile, Einzelheiten und Merkmale ergeben sich aus der nachfolgenden Beschreibung eines Ausführungsbeispiels der Erfindung anhand der Zeichnungen.

Es zeigen:
Fig. 1 eine schematische Ansicht einer Rohlingscheibe zur Darstellung einer Zahnersatz-Erzeugungsvorrichtung, wobei ein Teil der Innenstrukturen und ein kleinerer Teil der Außenstrukturen der Dentalrestaurationen bereits gefräst ist;
Fig. 2 einen Schnitt durch die Scheibe an einer Stelle mit einer vergleichsweise hohen Krone als Dentalrestauration;
Fig. 3 einen Schnitt durch die Scheibe mit einer vergleichsweise kurzen Krone als Dentalrestauration; und
Fig. 4 eine schematische Ansicht einer Rohlingscheibe in einer anderen Ausführungsform, wobei die Innenstruktur der sämtlichen Dentalrestaurationen bereits gefräst ist.

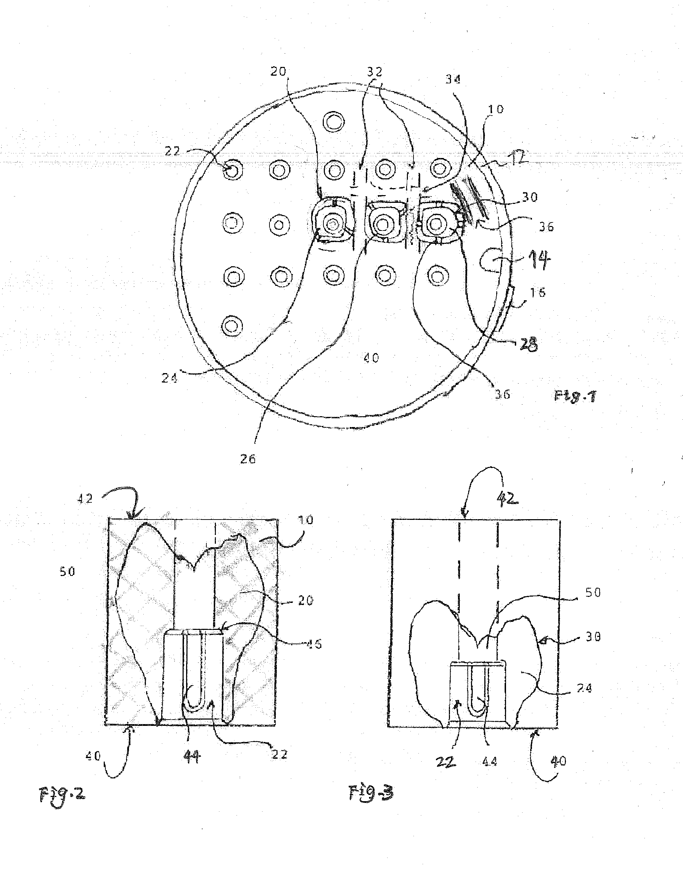

In Fig. 1 ist eine Rohlingscheibe 10 in der Draufsicht von der Gingivalseite schematisch dargestellt. Die Rohlingscheibe, also der Fräskörper, wird zu dem erfindungsgemäßen Verfahren zur Erzeugung von Dentalrestaurationen beziehungsweise für die erfindungsgemäße Dentalrestaurations-Erzeugungsvorrichtung eingesetzt. Der Fräskörper ist kreisrund und weist in gemäß der vorstehend genannten WO-Veröffentlichung einen ringförmig vorspringenden Rand 12 auf, an welchem sie in einer nicht dargestellten Werkstückaufnahme eingespannt ist.

Sie weist eine Nut 14 am Außenumfang als Verdrehsicherung auf, und einen Identifikationscode 16, beispielweise in Form eines Strichcodes. Dieser erlaubt eine Identifikation der Scheibe bei einem etwaigen Scheibenwechsel.

Die Scheibe ist dafür bestimmt, eine Vielzahl von Dentalrestaurationen auszubilden und als Fräskörper für die entsprechenden Fräsmaßnahmen zur Verfügung zu stellen. Über eine Software der zugehörigen CAD/CAM-Vorrichtung, insbesondere eine Nesting-Software, wird zunächst eine Mehrzahl von Kronen als Dentalrestaurationsteile zunächst virtuell angeordnet. Hierbei ist es auch möglich, eine bereits teilverbrauchte Scheibe mit dem gewünschten Material erneut einzusetzen und dann bei Bedarf lediglich eine Krone zu fertigen, zumindest vor dem nächsten Scheibenwechsel. Insofern erfolgt die virtuelle Anordnung jedenfalls gegenüber den bereits verbrauchten Bereichen der Scheibe.

Die Innenstruktur, insbesondere in den Höhen S, M und L, liegt zunächst passend zu einem zugehörigen Abutment, auf welches die Dentalrestauration später aufgesetzt werden soll, vorgefertigt vor. Hierbei sind aus Fig. 1 zahlreiche Innenstrukturen 22 ersichtlich, die etwas mehr als die Hälfte der Scheibe einnehmen. Diese sind gemäß Fig. 1 im Raster angeordnet; bevorzugt wird jedoch eine Nesting-Software eingesetzt, die die Anordnung hinsichtlich des möglichst geringen Materialverbrauchs optimiert.

Eine Optimierung erfolgt aber auch hinsichtlich der Auswahl der zu fräsenden Krone. An einer Stelle mit einer passenden Innenstruktur wird diese virtuell angeordnet, unter Einbeziehung der erforderlichen Randabstände.

Anschließend wird zu einem beliebigen späteren Zeitpunkt die Außenstruktur 30 der betreffenden Krone 24 basierend auf der Software der CAD/CAM-Vorrichtung gefertigt. Hierbei ist in der Darstellung in den Figuren bei den Kronen 24, 26 und 28 die Außenstruktur 30 bereits fertig gefräst. Die Anordnung bereits der Innenstruktur ist so erfolgt, dass je Sicherheitsabstände 32 bzw. 34 eingehalten werden, die als eine Art unbenutzte Scheibenstege die Scheibenstruktur aufrecht erhalten.

Jede Außenstruktur 30 ist zudem über geeignete Stützstreben 36 mit diesen Stegen verbunden. Im Beispielsfall beträgt die Breite dieser Scheibenstege minimal 3mm.

Gegenüber dem Rand 12 ist der Sicherheitsabstand 36 größer gehalten, und beträgt im Beispielsfalle 5mm.

Es versteht sich, dass bei der Anordnung der Kronen auch der Scheibe auf der Größe der Kronen in horizontaler Richtung Rechnung getragen wird. So lassen sich gegebenenfalls kleinere Kronen auch in kleinen Eckbereichen noch unterbringen.

Während Fig. 1 die Darstellung der Gingivalseite 40 zeigt, ist aus Fig. 2 die Ausnutzung der Scheibenhöhe ersichtlich. Die Dentalrestauration 20 erstreckt sich ausgehend von der Gingivalseite 40 bis zur Okklusalseite 42 hin und endet jedenfalls knapp unterhalb dieser. Auch die Innenstruktur 22 erstreckt sich ausgehend von der Gingivalseite 40. Es ist ein Steg 44 radial einwärts gerichtet vorgesehen, der in eine entsprechende Rille des Rohrabschnitts des Abutments eingreifen soll und hierfür geeignet geformt ist. In Gingivalrichtung läuft der Steg 44 gerundet aus. Die Innenstruktur 22 läuft in okklusaler und/oder in gingivaler Richtung in kleinen Radien 46 aus, um eine spannungsfreie Kraftübertragung zur Dentalrestauration 20 zu ermöglichen.

Wie aus Fig. 2 ersichtlich ist, erstreckt sich in Okklusalrichtung anschließend an die Innenstruktur 22 ein Schraubkanal 50. Dieser hat einen kleineren Innendurchmesser als die Innenstruktur 22 und ist dafür bestimmt, ein Schraubwerkzeug für die Abutmentschraube durchtreten zu lassen. Der Schraubkanal 50 durchtritt die Dentalrestauration 20, bevorzugt aber auch die Okklusalseite 42 der Scheibe 10.

In Fig. 2 ist eine Krone maximal möglicher Höhe für die Höhe der Scheibe 10 dargestellt. Demgegenüber weist die Krone 24 gemäß Fig. 3 eine wesentlich geringere Höhe auf. Sie erstreckt sich ebenfalls von der Gingivalseite 40 ausgehend, jedoch lediglich etwa über die halbe Höhe der Scheibe. Die Innenstruktur 22 gemäß Fig. 2 würde bei dieser Höhe die Krone 24 vollständig durchdringen. Erfindungsgemäß ist die Innenstruktur gemäß Fig. 3 dementsprechend gekürzt, auf die Höhe M. Auch in dieser Höhe dient der Steg 44 noch ohne weiteres als Verdrehsicherung gegenüber dem zugehörigen Abutment, das ebenfalls auf die Höhe M gekürzt ist.

Auch hier erstreckt sich der Schraubkanal 50 zur Okklusalseite 42 der Scheibe 10 hin durch diese hindurch. Er wird nach Belieben von der Gingivalseite 40 beim Fräsen mitgeformt, oder je nach Programmierung der CAD/CAM-Vorrichtung auch von der Okklusalseite 42, insbesondere dann, wenn die Scheibe 10 für das Fräsen des okklusalen Bereichs ohnehin gedreht wird.

Auch hier gilt, dass bevorzugt der Schraubkanal 50 zunächst geformt wird, bevor die Außenstruktur 30 der Krone 24 geformt wird.

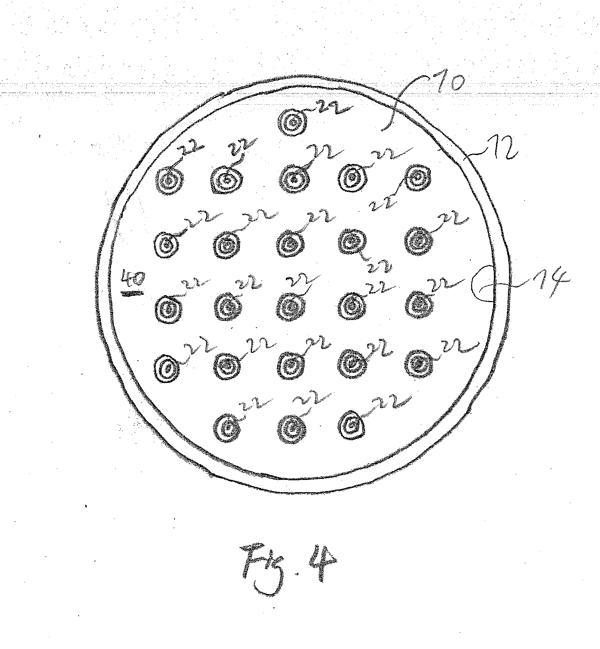

Gemäß Fig. 4 ist eine Rohlingscheibe in einer anderen Ausführungsform schematisch dargestellt, wobei die Innenstruktur der sämtlichen Dentalrestaurationen bereits gefräst ist oder während der Erstellung der Rohlingscheibe vor oder nach einem Sintern oder vor oder nach einem Vorsintern mit erstellt ist.

## Patentansprüche

1. Verfahren zur Erzeugung von Dentalrestaurationen (20), bei welchem jede Dentalrestauration (20) eine Krone (24, 26, 28) und ein Abutment aufweist, die insbesondere über eine Klebeverbindung nach jeweiliger Fertigstellung miteinander verbunden werden, **dadurch gekennzeichnet, dass** eine CAD/CAM-Vorrichtung eine Mehrzahl von Kronen (24, 26, 28) auf einer Scheibe (10) virtuell anordnet und dann in oder an jedem Kronenrohling eine Innenstruktur (22) passend zu dem zugehörigen, insbesondere präfabrizierten, Abutment, insbesondere hinsichtlich der Tiefe der Innenstruktur (22), per Schleifen oder Fräsen ausbildet, und anschließend hieran die Außenstruktur (30) der Krone (24, 26, 28) - ggf. unter Belassung von Haltestegen - ausbildet.

2. Verfahren nach Anspruch 1, **dadurch gekennzeichnet, dass** anschließend an die Erzeugung der Innenstruktur (22) bei mindestens einen Teil der Kronen (24, 26, 28) ein Schraubkanal (50) erzeugt werden, dessen Durchmesser kleiner als der Durchmesser der Innenstruktur (22) ist.

3. Verfahren nach einem der vorhergehenden Ansprüche, **dadurch gekennzeichnet, dass** die Software der CAD/CAM-Vorrichtung eine Identifikation der gefrästen oder zu fräsenden Kronen (24, 26, 28) vornimmt und sich die Stellen merkt, an welche Kronen (24, 26, 28) bereits mindestens teilweise herausgefräst sind, und bei einem neuen Erstellungsauftrag für eine neue Krone (24, 26, 28) eine freie Stelle der Scheibe (10) per Nesting aussucht.

4. Verfahren nach einem der vorhergehenden Ansprüche, **dadurch gekennzeichnet, dass** die Software der CAD/CAM-Vorrichtung so ausgelegt ist, dass die Kronen (24, 26, 28) voneinander einen Abstand entsprechend einem vorgegebenen Abstand mit einer Sicherheitsmarge einhalten, der insbesondere mindestens 3 mm beträgt, und insbesondere vom Rand (12) der Scheibe (10) einen weiteren Sicherheitsabstand (36), der insbesondere 5 mm beträgt.

5. Verfahren nach einem der vorhergehenden Ansprüche, **dadurch gekennzeichnet, dass** die CAD/CAM-Vorrichtung die Innenstruktur (22) passend zu einer Mehrzahl, insbesondere drei, vordefinierten Höhen des Rohrabschnitts des Abutments ausbildet, insbesondere basierend auf einer Bibliothek mit unterschiedlichen Formen und/oder Höhen, und dass das Abutment nach Bedarf auf die entsprechende diskrete Höhe gekürzt wird.

6. Verfahren nach einem der vorhergehenden Ansprüche, **dadurch gekennzeichnet, dass** eine teilbenutzte Scheibe (10) nach ihrer Verwendung aus einer zugehörigen Dentalfräsmaschine oder Dentalschleifmaschine entfernt und bei Bedarf nach einer Krone aus dem gleichen Material erneut in die Dentalfräsmaschine oder Dentalschleifmaschine eingesetzt wird, wobei insbesondere eine Markierung oder Verdrehsicherung die Position der Scheibe (10) in der Werkstückaufnahme der Dentalfräsmaschine oder der Dentalschleifmaschine festlegt und/oder dass an der den Rohling bildende Scheibe (10) Markierungen als Referenzpunkte oder Messpunkte für die CAD/CAM-Vorrichtung angebracht sind.

7. Verfahren zur Erzeugung einer Dentalrestauration, bei welchem jede Dentalrestauration (20) eine Krone und ein mit dieser zu verklebendes Abutment aufweisen, **dadurch gekennzeichnet, dass** eine CAD/CAM-Vorrichtung eine Mehrzahl von Kronen (24, 26, 28) auf einem den Rohling bildenden Scheibe (10) virtuell anordnet, und dass die CAD/CAM-Vorrichtung in oder an jedem Kronenrohling mit einer per Schleifen oder Fräsen vorgefertigten Innenstruktur (22) passend zu dem zugehörigen Abutment die Außenstruktur (30) der Krone - gegebenenfalls unter Belassung von Haltestegen - fräst oder schleift.

8. Vefahren nach einem der vorhergehenden Ansprüche, **dadurch gekennzeichnet, dass** die Innenstruktur (22) der Kronen (24, 26, 28) in einer standardisierten, gegebenenfalls gekürzten Tiefe, passend zu einer standardisierten Höhe des Rohrabschnitts des Abutments, unter Einberechnung eines Klebespalts, erzeugt wird, insbesondere durch spanabhebende Bearbeitung einer Rohlingscheibe, oder durch Erstellen dieser mit den Innenstrukturen vor oder nach einem Sintern oder vor oder nach einem Vorsintern.

9. Verfahren nach einem der vorhergehenden Ansprüche , **dadurch gekennzeichnet, dass** die Innenstruktur (22) und die Außenstruktur (30) der Krone anschließend an die zervikale Fläche der Scheibe (10) ausgebildet, insbesondere gefräst, sind, und dass bei Bedarf okklusale Bereiche der Innenstruktur (22) und der Außenstruktur (30) von der okklusalen Seite der Scheibe (10) ausgehend entfernt, insbesondere weggefräst sind, und dass die zervikale Seite der Scheibe (10) eine Referenzseite für die Anordnung der Kronen (24, 26, 28) bildet.

10. Dentalrestaurations-Erzeugungsvorrichtung, bei welcher jede Dentalrestauration (20) eine Krone (24, 26, 28) und ein mit dieser zu verklebendes Abutment aufweist, **dadurch gekennzeichnet, dass** die Erzeugungsvorrichtung eine CAD/CAM-Vorrichtung für die virtuelle Anordung einer Mehrzahl von Kronen (24, 26, 28) auf einer Rohlingscheibe (10) aufweist, dass an jedem Kronenrohling eine Innenstruktur (22) passend zu dem zugehörigen, insbesondere präfabrizierten, Abutment, insbesondere hinsichtlich der Tiefe der Innenstruktur (22), ausgebildet ist, und dass die CAD/CAM-Vorrichtung die Außenstruktur (30) der Krone (24, 26, 28) - ggf. unter Belassung von Haltestegen - fräst oder schleift, und dass insbesondere eine Software der CAD/CAM-Vorrichtung die Auswahl und Anordnung der Außenstruktur (30) der Krone passend zu einer vorliegenden Innenstruktur vornimmt.

11. Dentalrestaurations-Erzeugungsvorrichtung nach Anspruch 10, **dadurch gekennzeichnet, dass** die Innenstruktur (22) über eine Industriefräsmaschine, insbesondere mit 5 Achsen, in einer Standardhöhe vorgefertigt ist und dass eine Arbeitsdentalfräsmaschine, insbesondere eine 3-Achs- oder 4-Achs-Maschine, basierend auf dem der Bearbeitung zugeordneten CAD-Datensatz fräst.

12. Fräskörper für das Erstellen mehrerer Dentalrestaurationen mit je einer Krone (24, 26, 28) und je einem mit dieser zu verklebenden Abutment, **dadurch gekennzeichnet, dass** auf einem Rohlingkörper oder einer Rohlingscheibe (10), aus der der Fräskörper erzeugt ist, Innenstrukturen (22) der Kronen (24,26, 28) passend zu zugehörigen, insbesondere präfabrizierten, Abutments nebeneinander ausbildet sind, und/oder dass an dem Fräskörper Außenstrukturen (30) der Kronen (24, 26, 28) - ggf. unter Belassung von Haltestegen - per Fräsen oder Schleifen ausgebildet sind.

13. Fräskörper nach Anspruch 12, **dadurch gekennzeichnet, dass** die Innenstruktur (22) in einem Konuswinkel von 0,5° bis 8° gefertigt ist, insbesondere die Innenkanten und die Außenkanten der Innenstruktur (22) mit Radien zwischen 0,5 mm und 1,0 mm gefertigt sind und die vorzugsweise zervikale Stufenbreite der Innenstruktur (22) mit einem Radius von mehr als 0,3 mm nach der Art einer Hohlkehle ausgebildet ist.

14. Fräskörper nach Anspruch 12 oder 13, **dadurch gekennzeichnet, dass** an dem Fräskörper Außenstrukturen (30) der Kronen (24, 26, 28) - ggf. unter Belassung von Haltestegen - per Fräsen oder Schleifen ausgebildet sind und/oder dass das Abutment eine sich entlang seines Rohrabschnitts erstreckende Rille aufweist, die für den Eingriff eines Stegs (44) der Innenstruktur (22) der Krone (24) bestimmt ist.

15. Fräskörper nach einem der Ansprüche 12 bis 14, **dadurch gekennzeichnet, dass** eine Scheibe (10) eine Markierung oder Verdrehsicherung für die Position der Scheibe (10) in der Werkstückaufnahme der Dentalfräsmaschine oder der Dentalschleifmaschine aufweist und/oder dass die den Rohling bildende Scheibe (10) Markierungen als Referenzpunkte oder Messpunkte für die CAD/CAM-Vorrichtung aufweist.
